# EUROPEAN PATENT APPLICATION

(11) **EP 3 521 861 A1**
(43) Date of publication of application: **07.08.2019**
(21) Application number: 17855063.8
(22) Date of filing: 21.09.2017
(51) Int. Cl.: G01T 1/20

(54) **SCINTILLATOR CELL**

(30) Priority: 28.09.2016 ES 201631258
(71) Applicant: Universidad Carlos III de Madrid, 28919 Leganés - Madrid (ES)
(72) Inventor: KONSTANTINOU, Georgios, 28919 Leganés (Madrid) (ES); VAQUERO LÓPEZ, Juan José, 28919 Leganés (Madrid) (ES); CHIL PÉREZ, Rigoberto, 28919 Leganés (Madrid) (ES); DESCO MENÉNDEZ, Manuel, 28919 Leganés (Madrid) (ES)
(74) Representative: Pons
(86) International application number: PCT/ES2017/070623
(87) International publication number: WO 2018/060534

(57) **Abstract**

The present invention relates to a scintillator cell that can be used in a positron emission tomography (PET) device, which cell comprises a polyhedronal monolithic scintillator material having a crystalline structure and a topology of translucent areas formed by randomly distributed points, the areas being engraved into the scintillator material using laser techniques, wherein the topology is coupled to a photodetector system. Therefore, the present invention could belong to the field of biomedical diagnostic devices, and to the field of devices for radiation detection.

## Description

### OBJECT OF THE INVENTION

The object of the present invention relates to a scintillator cell that can be used in a positron emission tomography (PET) device comprising a polyhedronal monolithic scintillator material having a crystalline structure and a topology of translucent areas formed by randomly distributed points, the areas being engraved into the scintillator material using laser techniques, wherein the topology is coupled to a photodetector system.

Therefore, the present invention could belong to the field of biomedical diagnostic devices and to the field of devices for radiation detection.

### BACKGROUND OF THE INVENTION

Today, scintillator crystals configured as scintillator cells are used in different fields of science and technology, in which the energy, the direction or arrival rate of gamma rays or X rays can provide useful information about the phenomenon under study. Examples of use are cosmology and astrophysics, particle physics, environmental sciences, phytology and medical imaging, such as in positron emission tomography (PET) devices, for example.

In any of these applications, scintillator cells are used to convert the high-energy photons of the gamma rays or X rays to low-energy photons that can be easily measured by a photodetector. Said conversion takes place as the result of using scintillator materials.

A photon (electromagnetic radiation) that passes through a scintillator material interacts with it such that it loses energy by means of the production of a number of lower-energy photons, through photoelectric interactions or Compton or Rayleigh scattering. These photons, often with energy corresponding to the visible band of the electromagnetic spectrum, travel through the scintillator material, which acts as a light guide, and are collected by a photodetector optically coupled to one or several faces of said scintillator material.

When a high-energy photon interacts with the scintillator material, the sum of the low-energy photons produced and deposited on the photodetector is detected. Furthermore, the amount and the shape of said deposition of energy provide information about the characteristics of the high-energy photon and the nature of the interaction with the scintillator material. This information, which is an electric signal generated and amplified by the photodetector itself, can then be processed in several ways, by analogue or digital means, and, in this latter case, can be stored and subsequently analyzed.

Commonly used scintillator materials can be of an organic or inorganic nature and can be in solid, liquid or gaseous state. An example of inorganic scintillator material used commonly in scintillator cells is the sodium iodide (Nal), which emits photons in UV-VIS regions and has a very good performance but is hygroscopic, which hinders the use thereof in open spaces given that they gradually lose their transparency upon contact with the moisture in atmospheric air.

Other examples of these inorganic scintillator materials are cerium-doped lutetium yttrium oxyorthosilicate (LYSO:Ce), cerium-doped lutetium oxyorthosilicate (LSO:Ce), gadolinium oxyorthosilicate (GSO) and bismuth germanium oxide (BGO).

One example is the application of said inorganic scintillator materials in the field of positron emission tomography or PET, where a radiotracer is injected *in vivo* into the subject under study, which radiotracer consists of a biological molecule such as the glucose combined with a radioactive isotope which decays by means of the known β+ decay. Rapidly emitted positrons lose their kinetic energy and are annihilated when they interact with an electron of the peripheral tissue (β+/e- event). The product of this annihilation are two high-energy photons of exactly 511 keV (equivalent to the mass of one electron or positron) and with opposite directions. If a pair of gamma radiation detectors such as those previously described capture both high-energy photons, with temporal resolution that is sufficient for confirming their common origin, a spatial line of response can be drawn, within which the β+/e- event took place. Through the detection of a number of these events, the three-dimensional distribution of the radiotracer in the subject can be reconstructed, which thus allows obtaining a functional 3D image.

However, for the mentioned system to provide useful information, it is necessary to group together a given number of detectors, organized in a three-dimensional configuration, which maximizes the possibility of capturing the concurrence of high-energy photons, within the so-called field of vision and thus achieving a spatial position suited to the subject under study.

Several types of imaging system have been developed, among which there are included assemblies with two facing planes or a combination of rings and probes, such as the positron emission tomography technique, which obtain images with functional and metabolic information. Additionally, systems have been developed which are intended for facilitating co-recording with other imaging methods, such as the combination of PET with computed tomography (CT) or with magnetic resonance imaging (MRI), for example, which provide supplementary anatomical information.

The importance of the nature of the scintillator material in this field is well known. High-energy photons of 511 keV are energetic enough to virtually pass through any biological tissue without interaction. In this context, inorganic scintillator materials, such as some crystals, and ceramic materials are denser than commonly used organic scintillator materials or plastics. Furthermore, inorganic scintillator materials have a high atomic number, which entails a better probability of slowing down high-energy photons. Another important element of said inorganic scintillator materials involves their high performance, which dictates the amount of low-energy photons obtained by each scintillator and directly affects the sensitivity of the scintillator cell. Nevertheless, the temporal characteristics which describe the temporal stochastic delay of the release of low-energy photons in scintillation resulting from the absorption of the gamma photon by the mentioned inorganic scintillator materials limit the downtime of the scintillator cell, as well as the maximum rate of high-energy photons that it can detect. Therefore, it would be necessary to improve the temporal response of existing scintillator cells.

### DESCRIPTION OF THE INVENTION

Today, a measure for improving the temporal response of existing scintillator cells using inorganic scintillator materials is the guiding of the photons through the material by means of reflective or refractive surfaces coupled to the walls of the crystal or by means of mechanical or chemical abrasion resulting in a surface which facilitates the guiding of the photons inside the crystal and reduces the possibility of said photons from getting out of said crystal.

The present invention seeks to improve the performance of scintillator cells based on the use of inorganic scintillator materials, in particular, the temporal response thereof without sacrificing the spatial resolution of the assembly. To that end, said cell comprises a polyhedronal monolithic scintillator material having a crystalline structure and a topology of translucent areas formed by randomly distributed points, which is engraved into the scintillator material using laser techniques and is connected with a photodetector system.

In a first aspect, the present invention relates to a scintillator cell comprising:
- a polyhedronal monolithic scintillator material having a crystalline structure comprising at least one inlet face and at least one outlet face, where its inlet face receives at least one energy photon F₁ corresponding to the X ray and gamma ray region of the electromagnetic spectrum, between 1 keV and 1.2 MeV, and where the outer face emits lower-energy photons F₂ (compared with the energy of incident photon F₁), between 100 nm and 990 nm,
- at least one photodetector optically connected with the outlet face of the scintillator material which detects the position, the energy and the time of arrival of the photons F₂ and converts F₂ into an electric signal, and
- a control unit connected with the photodetector which receives and processes the electric signal coming from the photodetector,
characterized in that said scintillator material has a topology of translucent areas formed by randomly distributed points therein which generates light guides between the inlet face and the outlet face,
and said photodetector is connected along the outlet face of the scintillator material.

In the present invention, "scintillator material" is understood to mean that material having a crystalline structure, being of an organic or inorganic nature, having luminescent properties, i.e. that material capable of absorbing part of the energy of an incident photon and re-emitting it in the form of lower-energy photons compared with the energy of the incident photon. The scintillator material is a monolith, i.e. a polyhedronal solid comprising at least one inlet face and at least one outlet face. Said monolith contains a topology of translucent areas formed by randomly distributed points having a size and arbitrary shape therein, which generates light guides between the inlet face and the outlet face. These translucent areas formed by randomly distributed points or randomized light guiding surfaces are uniform at the macroscopic level; they efficiently reflect and guide the photons F₂ to the outlet face, i.e. the optical properties are statistically consistent at the macroscopic level.

The topology of the translucent surfaces defines the tessellation of the inlet face and of the outlet face; said tessellation can be identical or different.

It must be observed that the connection between the inlet face and the outlet face is not limited to said faces being placed facing one another. Moreover, in the present invention "arbitrary shape" of the translucent areas is understood to mean as randomly distributed points such as those forms or hose designs resulting in light guides, without limitation to a segmentation into rectangular parallelepipeds, that is without limitations to planes that are orthogonal to one another.

The topology of translucent areas formed by randomly distributed points having an arbitrary size and shapes inside the scintillator material is generated by means of engraving, using for example laser engraving techniques according to that described in US5206496. Therefore, in a preferred embodiment of the present invention, the topology of translucent areas formed by randomly distributed points of the scintillator material is engraved into the material by means of laser techniques.

The fact that the size of the translucent areas formed by randomly distributed points (or randomized light guiding surfaces) is arbitrary confers to the scintillator cell the advantage of being able to modulate its properties in relation to detection efficiency, energy resolution, temporal resolution, spatial resolution, and the advantage of defining the response lines when said cells are integrated in a complete imaging system, such as a PET for example.

The photodetector is coupled directly or indirectly to the light guides of the outlet face of the scintillator material.

In a preferred embodiment, the photodetector is selected from photomultiplier tubes, avalanche photodiodes, single-photon avalanche diodes or silicon photomultipliers.

In another preferred embodiment, the photodetector is optically coupled to a light guide, which is also optically coupled to the scintillator for combining the spatial distribution of the light.

Another preferred embodiment of the invention relates to the scintillator cell characterized in that the scintillator material is selected from scintillator crystals optimal for the detection of photons between 1 keV and 10 MeV. Preferably the scintillator material is selected from cerium-doped gadolinium orthosilicate (GSO:Ce), cerium-doped lutetium orthosilicate (LSO:Ce), cerium-doped lutetium yttrium orthosilicate (LYSO:Ce), Gd₃(Al,Ga)₅O1₂:Ce, GAGG:Ce), doped sodium iodide, cesium iodide, bismuth germanate (BGO), barium fluoride (BaF₂), europium-doped calcium fluoride (CaF₂(Eu)), silver-doped zinc sulfide (ZnS(Ag)), calcium tungstate (CaWO₄), cadmium tungstate (CdWO₄), YAG(Ce) (Y₃Al₅O₁₂(Ce)), cerium-doped lanthanum chloride (LaCl₃(Ce)) and cerium-doped lanthanum bromide (LaBr₃(Ce)).

The topology of translucent areas formed by randomly distributed points in the scintillator material must be related to a quality parameter derived from the measurement of the performance of the detector in which said scintillator cells are integrated, i.e. the topology must be related to the technical characteristics of the photodetector such as the shape or the geometry of the detecting part of the device, as well as its spatial and temporal resolution, among others. So the tessellation engraved using laser into the scintillator material could be selected according to multiple geometries.

Preferably, in the present invention, the tessellation is selected from a truncated hexagonal tessellation, a trihexagonal tessellation, a truncated square tessellation, a trihexagonal tessellation, a truncated hexagonal tessellation and a tessellation formed by curved sections.

In another preferred embodiment of the present invention, the topology of translucent areas in the scintillator material may correspond to tessellations derived from calculations of performance maps of the assembly of detectors or another geodesic or Euclidean criterion which allows performing a virtual segmentation of the monolithic scintillator crystal.

Lastly, in another preferred embodiment of the present invention the translucent areas in the scintillator material are preferably tessellations selected from a Voronoi tessellation, a Dirichlet tessellation and a tessellation in Delaunay triangulations.

It should be pointed out that when the aforementioned tessellations are used, a photodetector system is preferably used instead of a single photodetector. The person skilled in the art will know how to choose the shape or geometry of the photodetector, its spatial and temporal resolution depending on the tessellation of the translucent areas engraved using laser into the scintillator material or vice versa.

### DESCRIPTION OF THE DRAWINGS

To complement the description that is being made and for the purpose of helping to better understand the features of the invention, according to a preferred practical embodiment thereof, a set of drawings is attached as an integral part of said description, a set of drawings wherein the following has been depicted, with an illustrative and non-limiting character:
Figure 1 shows a schematic view of a scintillator comprising an arrangement of translucent surfaces which defines an array of hexagonal shaped light guides (a) and the section thereof with the reading surface (b).
Figure 2 shows a schematic view of a scintillator comprising a truncated square tessellation arranged between the surfaces (a) and the section thereof with the reading surface (b).
Figure 3 shows a schematic view of the reading surface of the truncated hexagonal tessellation without (a) and with offset (b), and a section with the reading surface of a tessellation according to a Voronoi map (c).
Figure 4 shows a schematic view which shows the depth of interaction diagram, where the upper and lower parts of the scintillator are engraved with similar pixels but with an offset of half a pixel in directions X and Y, the conceptual image (a), and the projection of the upper part with respect to the lower part (b).
Figure 5 shows a schematic view of a depth of interaction diagram, where the upper and lower parts of the pixels are engraved with translucent walls of different opacities.
Figure 6 shows reading results of a hexagonal pattern, two-dimensional histogram (field filling diagram) of the transverse location (a) and distribution of energy (b) of the scintillation events generated by a source of ²²Na, and in which there can be observed, from left to right, the scattering area, the highest radiation peak of 511 keV, and a final peak of 1.2 MeV.

### PREFERRED EMBODIMENT OF THE INVENTION

The engraving of a tessellation of scintillator cells on a monolithic block of LYSO crystal is proposed by using a pulsed laser which for this particular case is Nd:YAG (532 nm), and has a repetition rate that can range between 1 kHz and 10 kHz, with pulses having a duration between 1 ns and 10 ns and a deposited energy between 0.01 and 1 mJ per pulse depending on the type of monolithic scintillator material used. Additionally, the laser system, or the system for holding the monolithic block to be engraved, or both systems comprise positioning mechanisms for performing relative movements in space between the laser and the monolithic block which allow tracking the entire space inside the monolithic block and its surfaces, where said pulse of the laser beam will have to be focused and the discontinuity of the optical properties of the scintillator material having a crystalline structure thus created.

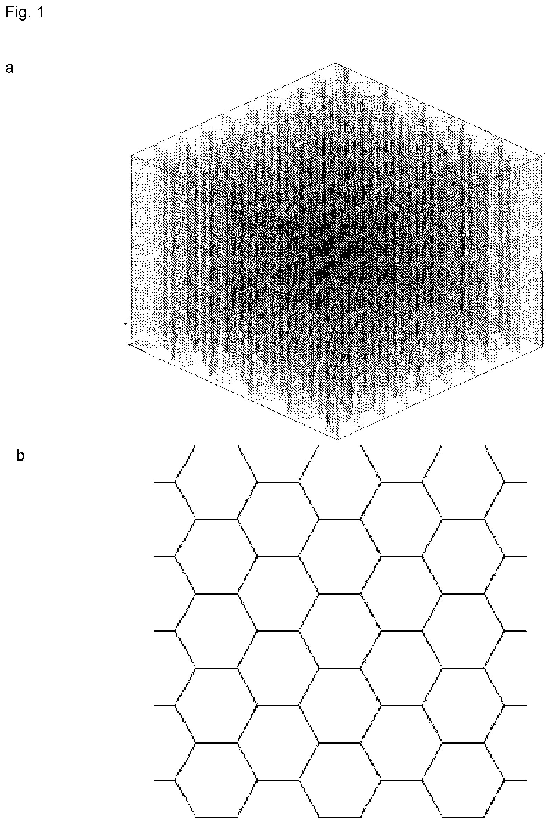

Figure 1 shows a schematic view of a scintillator comprising an arrangement of translucent surfaces which defines an array of hexagonal shaped light guides (a) and the section thereof with the reading surface (b).

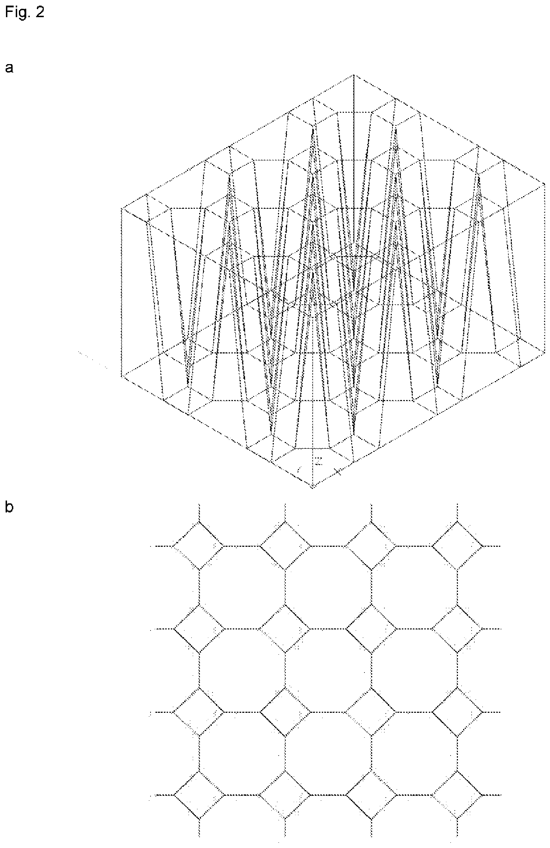

Figure 2 shows a schematic view of a scintillator comprising a truncated square tessellation arranged between the surfaces (a) and the section thereof with the reading surface (b).

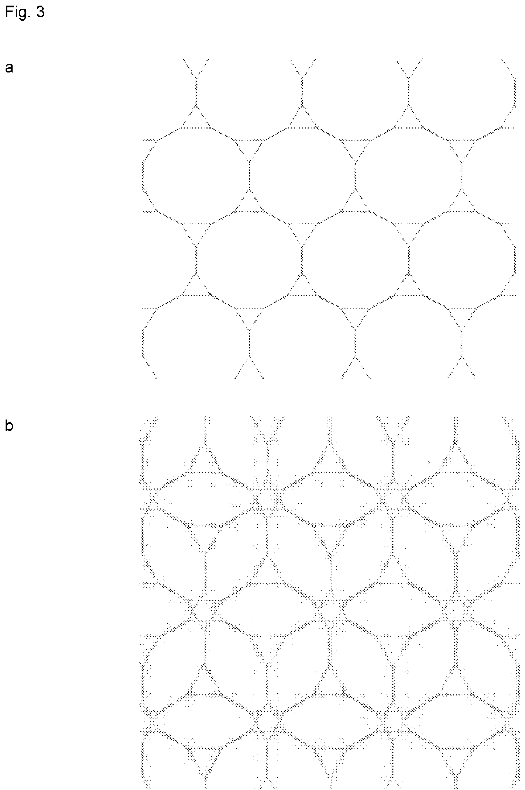

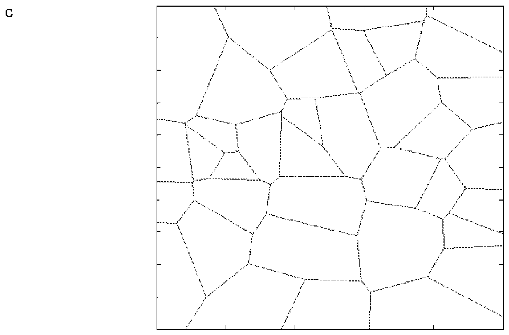

Figure 3 shows a schematic view of the reading surface of the truncated hexagonal tessellation without (a) and with offset (b), and a section with the reading surface of a tessellation according to a Voronoi map (c).

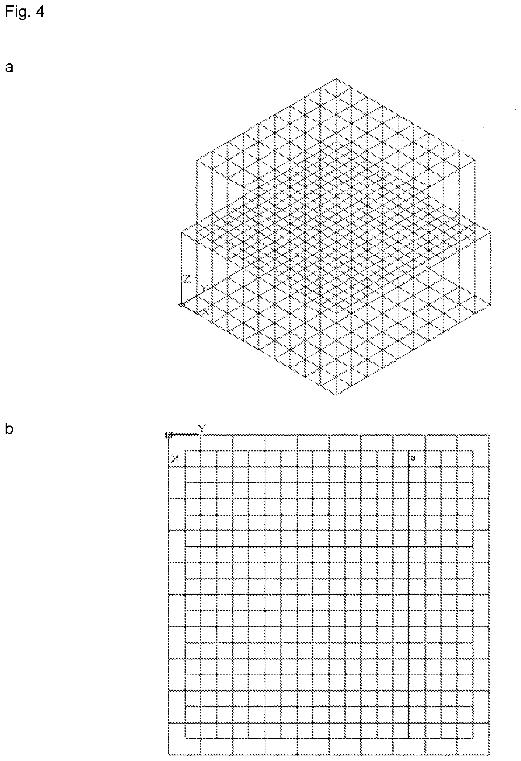

Figure 4 shows a schematic view which shows the depth of interaction diagram, where the upper and lower parts of the scintillator are engraved with similar pixels but with an offset of half a pixel in directions X and Y, as suggested in patent US 20110121184 A1, the conceptual image (a), and the projection of the upper part with respect to the lower part (b).

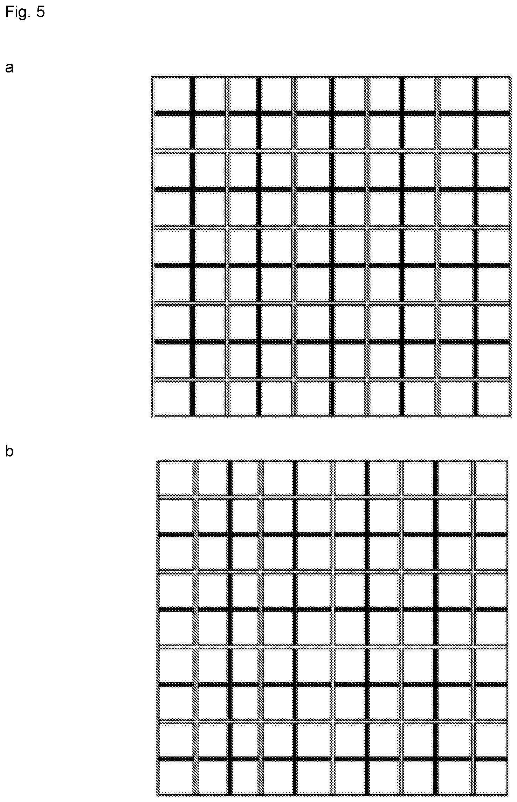

Figure 5 shows a schematic view of a depth of interaction diagram, where the upper and lower parts of the pixels are engraved with translucent walls of different opacities.

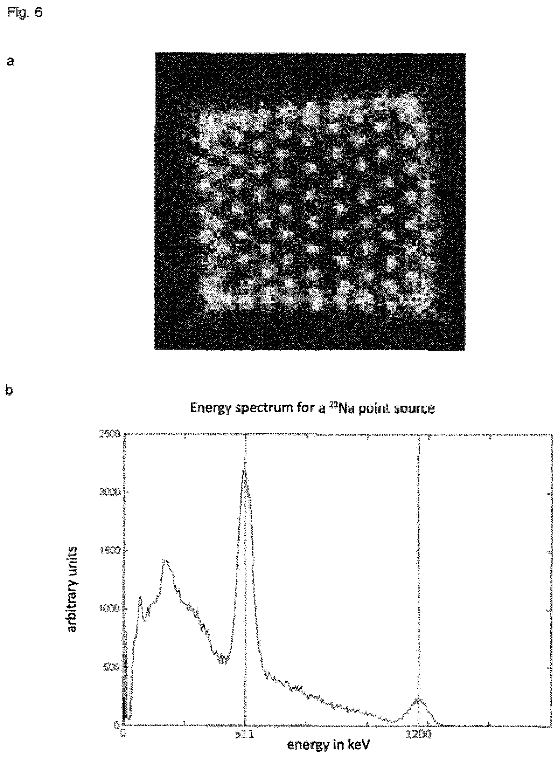

Figure 6 shows reading results of a hexagonal pattern, two-dimensional histogram (field filling diagram) of the transverse location (a) and distribution of energy (b) of the scintillation events generated by a source of ²²Na, and in which there can be observed, from left to right, the scattering area, the highest radiation peak of 511 keV, and a final peak of 1.2 MeV.

To illustrate the invention, is selected by way of example the hexagonal grid design with the stochastic distribution of position and size of translucent points. The reading of the events is taken with a system of photomultiplier tubes. The area of the surface of each pixel is 1.4 square millimeters, with the sides of the hexagons being less than 0.7 millimeters. The polygons located at the edges of the crystal are pentagons and irregular trapezoids which can resolve up to a minimum size of 0.9 square millimeters. This pattern has the following advantages. First, the system improves the temporal properties of the pulse and reduces the noise from the signals generated by digital photodetectors. Furthermore, in the case of being used in applying SPECT, it could be used for optimizing current technology using gamma ray collimators to form the image on a two-dimensional plane. A very common problem is how to pair up the pixels with the openings of the collimator depending on the geometry. This problem is solved with the hexagonal pattern design: given that it allows pairing up the holes of hexagonal collimators with hexagonal light guides.

The operation of the scintillator cell of the present invention by measuring its performance in terms of spatial resolution and energy resolution is demonstrated below.

Figure 6 (a) shows the image obtained with a scintillator which comprises making use of the hexagonal pattern. To calculate the spatial resolution, the distance between the centers of two bright points is measured and said distance is divided by its half width. For this image, the best spatial resolution reaches 35 %, about 0.5 millimeters.

Figure 6 (b) shows the energy spectrum of a radioactive source of ²²Na. The width of the peak of 511 keV is uniform in the entire crystal, its resolution mean as FWHM *(Full Width Half Maximum)* is 14%. To take these measurements, a position-sensitive photodetector is coupled to the reading face of the scintillator with optical silicone, which has a refractive index equivalent to that of the glass of the tube, such that optimal optical coupling between the surface of the scintillator and photodetector is achieved. The electric signal produced by the photodetector is divided into four signals encoding the transverse position of the scintillation event and its total energy. To take these measurements, a ²²Na point source the spectrum of which is known in the scientific literature, has been used, and by measuring the result it can be confirmed that both the acquisition and the representation of the events are correct and true to the expected distribution; the peak of 511 keV is clearly shown in the center of the graph. The field fill image is generated from a spatial location encoded by the electronic circuit connected to the photodetector. The quality of the resulting image, which is a two-dimensional histogram, is measured by the separation between the peaks of the said histogram. The peaks correspond to the centers of crystals defined by using the technique presented in this invention. The quality of the light guiding by the patterns of translucent points, while at the same time the resolution of the energy spectrum is not affected, is thereby demonstrated.

## Claims

1. A scintillator cell comprising:
• a polyhedronal monolithic scintillator material having a crystalline structure comprising at least one inlet face and at least one outlet face,
wherein the inlet face receives an energy photon F₁ corresponding to the X ray and gamma ray region of the electromagnetic spectrum, between 1 keV and 1.2 MeV,
and wherein the outer face emits lower-energy photons F₂, between 100 nm and 990 nm,
• at least one photodetector optically coupled with the outlet face of the scintillator material which detects the position, the energy and the time of arrival of F₂ and converts F₂ into an electric signal, and
• a control unit connected with the photodetector which receives and processes the electric signal coming from the photodetector,
**characterized in that**
• said scintillator material has a topology of translucent areas formed by randomly distributed points therein which generates light guides between the inlet face and the outlet face, and
• said photodetector is coupled with the scintillator material along the outlet face of said scintillator material.

2. The scintillator cell according to claim 1, **characterized in that** the topology of translucent areas formed by randomly distributed points of the scintillator material is engraved into the material by means of laser techniques.

3. The scintillator cell according to any of claims 1 or 2, **characterized in that** the photodetector is selected from photomultiplier tubes, avalanche photodiodes, single-photon avalanche diodes or silicon photomultipliers.

4. The scintillator cell according to any of claims 1 to 3, **characterized in that** the photodetector is optically coupled to a light guide, which is also optically coupled to the outlet face of the scintillator material and combines the spatial distribution of the light.

5. The scintillator cell according to any of claims 1 to 4, **characterized in that** the scintillator material is selected from cerium-doped gadolinium orthosilicate (GSO:Ce), cerium-doped lutetium orthosilicate (LSO:Ce), cerium-doped lutetium yttrium orthosilicate (LYSO:Ce), Gd₃(Al,Ga)₅O1₂:Ce, GAGG:Ce, doped sodium iodide, cesium iodide, bismuth germanate (BGO), barium fluoride BaF₂, europium-doped calcium fluoride CaF₂(Eu), silver-doped zinc sulfide ZnS(Ag), calcium tungstate CaWO₄, cadmium tungstate CdWO₄, (Y₃Al₅O₁₂(Ce)), cerium-doped lanthanum chloride (LaCl₃(Ce)) and cerium-doped lanthanum bromide (LaBr₃(Ce)).

6. The scintillator cell according to any of claims 1 to 5, **characterized in that** the topology of translucent areas formed by randomly distributed points in the scintillator material form a tessellation.

7. The scintillator cell according to claim 6, **characterized in that** the topology of translucent areas formed by randomly distributed points in the scintillator material is selected from a truncated hexagonal tessellation, a trihexagonal tessellation, a truncated square tessellation, a trihexagonal tessellation, a truncated hexagonal tessellation and a tessellation formed by curved sections.

8. The scintillator cell according to claim 6, **characterized in that** the topology of translucent areas formed by randomly distributed points in the scintillator material is defined depending on an optimization factor of the detector by means of a geodesic or Euclidean criterion which allows performing a virtual segmentation of the monolithic scintillator crystal.

9. The scintillator cell according to claim 6, **characterized in that** the topology of translucent areas formed by randomly distributed points in the scintillator material is selected from a Voronoi tessellation, a Dirichlet tessellation and a tessellation in Delaunay triangulations.
